# DEMANDE DE BREVET EUROPEEN

(11) **EP 4 721 837 A1**
(43) Date de publication de la demande: **08.04.2026**
(21) Numéro de dépôt: 25185203.4
(22) Date de dépôt: 25.06.2025
(51) Int. Cl.: B01D 53/00, B01D 53/02, F25J 3/02, F25J 3/06

(54) **PROCÉDÉ ET APPAREIL DE SÉPARATION D'UN MÉLANGE DE CO2 ET D'AZOTE PAR ADSORPTION ET PAR CONDENSATION PARTIELLE ET/OU DISTILLATION ET/OU SOLIDIFICATION**

(30) Priorité: 07.10.2024 FR 2410790
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: SONNENDRUCKER, Antoine, 75007 PARIS (FR); TRAN, Michael, 75007 PARIS (FR)
(74) Mandataire: Air Liquide

(57) **Abrégé**

Dans un procédé de séparation d'un mélange de CO2 et d'azote par adsorption et par condensation partielle et/ou distillation et/ou solidification, le mélange de CO2 et d'azote est séparé par adsorption formant un débit gazeux enrichi en azote et appauvri en CO2 (NRI) et un débit gazeux enrichi en CO2 et appauvri en azote, le débit enrichi en azote est réchauffé en l'envoyant en bas d'une tour (T) alimentée à un niveau d'introduction au-dessus du niveau d'envoi du débit enrichi en azote par un débit d'eau (CWI), le débit enrichi en CO2 est séparé par condensation partielle et/ou distillation et/ou solidification pour former un flux enrichi en CO2 et un débit contenant de l'azote et de la vapeur d'eau montant dans la tour est réchauffé par un échangeur de chaleur (E), l'échangeur de chaleur étant chauffé par un débit de fluide (F1) lui-même chauffé par une source de chaleur (I) générée par le procédé de séparation.

## Description

La présente invention est relative à un procédé et appareil de séparation d'un mélange de CO2 et d'azote par adsorption et par condensation partielle et/ou distillation et/ou solidification, le mélange contenant de préférence au moins 10 % mol de CO2, voire au moins 30% de CO2.

Il est connu de FR2884307A de séparer un mélange de CO2 et d'azote par adsorption de type PSA ou VPSA formant un débit enrichi en azote et appauvri en CO2 et un débit appauvri en azote et enrichi en CO2.Le débit enrichi en CO2 est séparé pour former un fluide riche en CO2 alors que le débit enrichi en azote est envoyé à une tour d'échange de matière et de chaleur pour refroidir un débit d'eau. Du gaz saturé en eau sort d'en haut de la tour. Dans un exemple, le débit enrichi en azote est détendu dans une turbine puis réchauffé dans un échangeur de chaleur d'une unité de séparation de CO2 à basse température en amont de la tour. Ceci implique d'avoir un échangeur de chaleur plus complexe et ne permet pas de sortir le débit enrichi en azote à une température élevée, puisqu'il doit refroidir l'eau de la tour.

Dans l'industrie, il est connu de longue date que le rejet à l'atmosphère de fumée saturée en eau peut provoquer un large nuage de condensation nommé panache. Afin de limiter la visibilité de ce panache mais également de favoriser l'écoulement de ces fumées vers la tête de la tour, des procédés ont été mis en place afin notamment de réchauffer ces fumées pour les éloigner du point de rosée. L'invention décrite ci-dessous propose un nouveau schéma permettant l'intégration du réchauffement des gaz résiduels rejetés à l'atmosphère sur une unité de capture de CO₂ par voie cryogénique.

### Etat de l'art

De nombreuses techniques existent afin de réchauffer un gaz saturé en eau avant d'être rejeté à l'atmosphère. Cependant sur les procédés de capture de CO₂ par voie cryogénique sur des fumées industrielles, des techniques adaptées n'existent pas.

EP1712858A1 décrit un procédé de séparation d'un mélange de CO2 et d'azote par adsorption et par condensation partielle et/ou distillation et/ou solidification dans lequel le mélange de CO2 et d'azote est séparé par adsorption formant un débit gazeux enrichi en azote et un débit gazeux enrichi en CO2, le débit enrichi en azote étant envoyé en cas d'une tour, alimentée en haut par de l'eau, ce qui peut provoquer la formation d'un panache en haut de la tour.

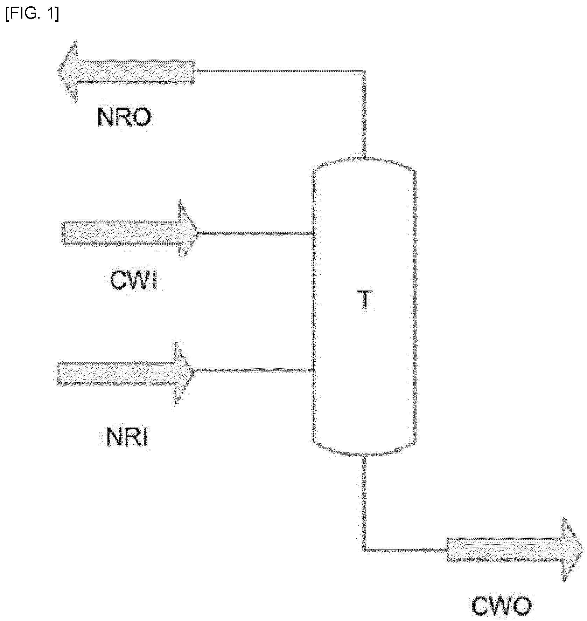

[FIG.1] illustre un procédé connu qui consiste à rejeter à l'atmosphère un gaz riche en azote NRO, relativement froid (10-12°C) et saturé en eau, résiduel de la capture de CO₂ sur fumées dans une tour T. Les valeurs données dans cet exemple doivent permettre au lecteur de mieux comprendre ce procédé existant mais il n'est pas admis que ces valeurs de température soient connues par l'homme de l'art. L'azote NRI envoyé en bas de la tour T est de préférence préalablement détendu jusqu'à une pression proche de la pression atmosphérique dans une turbine. L'azote résiduaire NRI, refroidi par la détente, est envoyé à la tour T à une température entre 2 et 6°C et refroidit par échange de chaleur direct l'eau CWI envoyée en tête de la tour, l'eau refroidie CWO sortant en cuve de la tour T et l'azote légèrement réchauffé NRO en haut.

Cette dernière étape réchauffe légèrement le gaz résiduel NRI jusqu'à 10-12°C mais sature également le gaz NRO en eau juste avant de le rejeter à l'atmosphère. Dans ce cas, l'azote mélangé à la vapeur d'eau sort de la tour T et est mis à l'air, pouvant générer un panache.

### Problèmes résolus par l'invention

Le procédé actuel rejette à l'atmosphère un gaz saturé en eau à température ambiante. Ceci induit un fort risque de créer un panache au contact avec l'air ambiant par condensation de l'eau contenue dans le gaz. Pour des raisons réglementaires ou de perturbation de l'environnement direct de l'unité, il peut être demandé de limiter fortement la présence de ces panaches. De plus, le réchauffement de ces fumées, selon l'invention, peut dans certains cas et selon la différence de température avec l'ambiant, permettre de faciliter l'écoulement du gaz enrichi en azote du bas de la tour vers la tête de la tour, qui dans certains cas peut atteindre plus de cent mètres de hauteur.

### Description de l'invention

Le principe de l'invention consiste à réchauffer le gaz riche en azote grâce à de la chaleur d'une source de chaleur présente dans le procédé de séparation. La chaleur est transmise à un échangeur de chaleur par un fluide, par exemple de l'eau ou de l'huile, qui réchauffe le gaz riche en azote contenant de la vapeur d'eau. La chaleur peut être par exemple de la chaleur d'un circuit de transfert de chaleur, par exemple d'une boucle de transfert de chaleur, utilisant un fluide, par exemple de l'eau, circulant dans un circuit comprenant une source de chaleur. Le circuit peut servir exemple pour refroidir et/ou réchauffer un autre élément du procédé de séparation, soit dans la partie de séparation par adsorption soit dans la partie de séparation par condensation partielle et/ou distillation et/ou solidification.

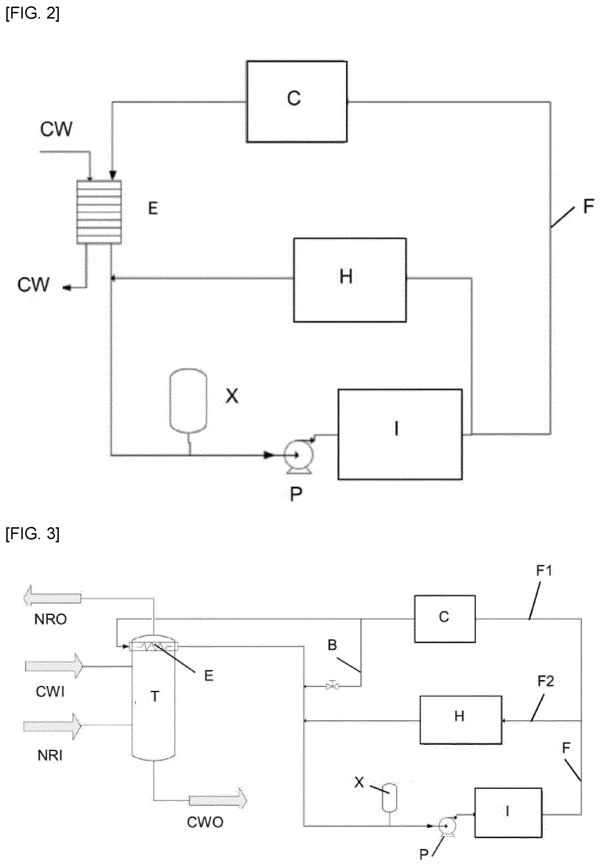

[FIG. 2] montre que dans un exemple, qui ne correspond pas à l'invention, une boucle de transfert de chaleur utilisant un fluide F circulant qui est de l'eau ou de l'huile par exemple. La boucle est en effet partiellement refroidie par de l'eau de refroidissement CW dans un échangeur de chaleur E afin d'avoir une température aux alentours de 20-30°C. Cette boucle de transfert de chaleur est incorporée dans un procédé de séparation de CO2 d'un mélange d'azote et de CO2 similaire celui décrit dans FR2884307A dans lequel le mélange est d'abord séparé par adsorption formant un débit gazeux enrichi en azote et appauvri en CO2 et un débit gazeux enrichi en CO2 et appauvri en azote. Le débit enrichi en CO2 est comprimé dans un compresseur, refroidi et ensuite séparé par condensation partielle et/ou distillation et/ou solidification pour former un flux enrichi en CO2. Dans cet exemple, pour refroidir par exemple le gaz du compresseur de gaz enrichi en CO2 produit par l'adsorption, par exemple dans un PSA CO2 destiné à la séparation par condensation partielle et/ou distillation, la boucle de transfert de chaleur sert à enlever la chaleur générée par la compression. Pour ce faire, le fluide circulant dans la boucle, ici l'eau de la boucle pressurisée par une pompe P, passe dans la source de chaleur, ici le refroidisseur intermédiaire ou final I d'un compresseur de gaz enrichi en CO2 pour en étant réchauffée. Le fluide est divisé en deux, envoyé en partie à un consommateur C pour apporter de la chaleur au consommateur C en étant lui-même refroidi et en partie à un consommateur H pour apporter de la chaleur au consommateur H en étant lui-même refroidi. Le consommateur H sert à chauffer le gaz enrichi en azote produit par le procédé d'adsorption, par exemple dans un PSA CO2, en amont de sa détente dans au moins une turbine. Le gaz enrichi en azote peut être le gaz NRI de la [FIG.1]. La partie du fluide réchauffée par le consommateur C est envoyée se refroidir dans l'échangeur de chaleur E contre l'eau de refroidissement CW. Ensuite elle est mélangée avec la partie du fluide utilisée pour chauffer le consommateur H et le débit mélangé est envoyé à la source de chaleur I.

Une tour de détente X permet d'absorber les variations de volume de fluide circulant dues aux températures variables ambiantes.

Il n'est pas admis qu'un circuit identique à celui de la Fig. 2 soit connu de l'homme de l'art.

Selon un objet de l'invention, il est prévu un procédé de séparation d'un mélange de CO2 et d'azote par adsorption et par condensation partielle et/ou distillation et/ou solidification dans lequel le mélange de CO2 et d'azote est séparé par adsorption formant un débit gazeux enrichi en azote et appauvri en CO2 et un débit gazeux enrichi en CO2 et appauvri en azote, le débit enrichi en azote est réchauffé en l'envoyant en bas d'une tour alimentée à un niveau d'introduction au-dessus du niveau d'envoi du débit enrichi en azote par un débit d'eau à une température supérieure à celle du débit enrichi en azote arrivant dans la tour, la tour contenant des moyens de mise en contact direct de l'eau et du débit enrichi en azote pour former un débit contenant de l'azote et de la vapeur d'eau montant dans la tour, le débit enrichi en CO2 est séparé par condensation partielle et/ou distillation et/ou solidification pour former un flux enrichi en CO2 caractérisé en ce que le débit contenant de l'azote et de la vapeur d'eau est réchauffé au-dessus du niveau d'introduction d'eau par un échangeur de chaleur arrangé pour chauffer par échange de chaleur indirect le débit contenant de l'azote et de la vapeur d'eau, l'échangeur de chaleur étant chauffé par au moins une partie d'un débit de fluide, par exemple de l'eau ou de l'huile, lui-même chauffé par une source de chaleur générée par le procédé de séparation.

Selon d'autres objets facultatifs de l'invention :
- l'échangeur de chaleur est constitué par un serpentin.
- l'échangeur de chaleur est constitué par un tuyau qui traverse une zone de la tour et qui est relié à un échangeur de chaleur à plaques.
- l'échangeur de chaleur se trouve dans la tour.
- la source de chaleur est un refroidisseur interétage ou final d'un compresseur du débit enrichi en CO2 qui comprime le débit destiné à la séparation par condensation partielle et/ou distillation et/ou solidification et/ou d'un compresseur du flux enrichi en CO2 et/ou d'un compresseur du mélange à séparer.
- la source de chaleur est l'air ambiant ou de l'huile à une température ambiante et la température du débit enrichi en azote entrant dans la tour est inférieure à la température ambiante.
- la température du débit contenant de l'azote et de la vapeur d'eau est régulée en variant le débit du fluide envoyé à l'échangeur de chaleur au moyen d'un circuit de contournement.
- le débit de fluide envoyé à l'échangeur de chaleur est varié au moyen du circuit de contournement en fonction de la température ambiante.
- le débit contenant de l'azote et de la vapeur d'eau est chauffé par l'échangeur de chaleur jusqu'à au moins 40°C.
- le débit enrichi en azote est détendu dans au moins une turbine en amont de la tour et éventuellement le débit de fluide chauffé par la source de chaleur générée par le procédé de séparation sert également à chauffer le débit enrichi en azote en amont de la détente dans l'au moins une turbine, de préférence en amont de l'échangeur de chaleur.
- le débit de fluide chauffé par la source de chaleur générée par le procédé de séparation sert également à chauffer un liquide de purge produit par la séparation par distillation.
- le débit de fluide qui est envoyé à l'échangeur de chaleur est renvoyé à la source de chaleur pour être réchauffé.
- Le débit enrichi en azote n'est pas refroidi en amont de la tour
- Le débit enrichi en azote n'est pas refroidi en amont de la tour à part par la détente dans l'au moins une turbine si présente
- le débit de fluide chauffé par la source de chaleur générée par le procédé de séparation est divisé en au moins deux parties qui servent chacun à réchauffer un consommateur et seule la plus chaude des au moins deux parties ayant servi à réchauffer leur consommateur respectif est envoyée à l'échangeur de chaleur. Selon un autre objet de l'invention, il est prévu un appareil de séparation d'un mélange de CO2 et d'azote par adsorption et par condensation partielle et/ou distillation et/ou solidification comprenant une unité de séparation par adsorption pour séparer le mélange de CO2 et d'azote par adsorption formant un débit gazeux enrichi en azote et appauvri en CO2 et un débit gazeux enrichi en CO2 et appauvri en azote, une tour de refroidissement d'eau, une conduite pour envoyer le débit enrichi en azote se réchauffer en l'envoyant en bas de la tour, une conduite pour envoyer un débit d'eau, à une température supérieure à celle du débit enrichi en azote arrivant dans la tour, pour alimenter la tour à un niveau d'introduction au-dessus du niveau d'envoi du débit enrichi en azote, la tour contenant des moyens de mise en contact direct de l'eau et du débit enrichi en azote pour former un débit contenant de l'azote et de la vapeur d'eau montant dans la tour, une unité de séparation par condensation partielle et/ou distillation et/ou solidification, une conduite pour envoyer le débit enrichi en CO2 pour être séparé dans l'unité de séparation par condensation partielle et/ou distillation et/ou solidification pour former un flux enrichi en CO2 caractérisé en ce qu'il comprend un échangeur de chaleur disposé pour chauffer par échange de chaleur indirect le débit contenant de l'azote et de la vapeur d'eau avant de sa mise à l'air, une conduite pour envoyer au moins une partie d'un débit de fluide, par exemple de l'eau ou de l'huile à l'échangeur de chaleur pour le chauffer, le débit de fluide étant lui-même relié pour être chauffé par une source de chaleur générée par le procédé de séparation en amont de la tour.

Le débit de fluide est de préférence relié pour être chauffé par la source de chaleur en aval de la tour.

La portion de fluide envoyée à l'échangeur de chaleur peut être refroidi en amont de la tour et en aval de la source de chaleur, par exemple pour réchauffer un élément du procédé de séparation, par exemple le débit enrichi en azote en amont d'une turbine et/ou un débit de purge de l'unité de séparation par condensation partielle et/ou distillation et/ou solidification.

L'invention sera décrite de manière plus détaillée en se référant aux figures où :
[FIG. 3] illustre un procédé d'évacuation d'un débit d'azote résiduaire provenant d'un procédé de séparation par adsorption d'un mélange de CO2 et d'azote.
[FIG. 4] illustre un procédé de séparation d'un mélange d'azote et de CO2 par adsorption et par condensation partielle et/ou distillation et/ou solidification avec évacuation d'un débit d'azote résiduaire.

L'idée est donc, selon une variante illustrée, de transmettre la chaleur dissipée par cet échangeur de chaleur E correspondant à celui de la [FIG.2] au gaz contenant de l'azote et de la vapeur d'eau qui monte dans la tour T, avant qu'il ne soit rejeté à l'atmosphère. Ainsi la tour T de la [FIG.1] est intégrée dans la [FIG.2] et l'échangeur de chaleur E est rajouté.

[FIG. 3] illustre le cas dans lequel une seule des portions F1, F2 de fluide F refroidies par les deux consommateurs C, H de la [FIG.2] circule à travers une zone supérieure de la tour eau-azote T dans un échangeur de type serpentin E, qui remplace l'échangeur E de la [FIG.2]. Ce dispositif permet de réchauffer l'azote mélangé à de la vapeur d'eau montant dans la tour T jusqu'à des températures de l'ordre de 40°C et ainsi de refroidir l'eau envoyée à l'échangeur E. Dans certains cas et suivant les configurations, la température de l'azote réchauffée peut également excéder les 40°C.

L'azote mélangé à la vapeur d'eau sort de la tour T et est mis à l'air comme débit NRO, sans générer de panache. Ainsi la chaleur récupérée par la source de chaleur, ici l'élément I, un refroidisseur intermédiaire ou final I d'un compresseur. Le compresseur peut être un compresseur de gaz enrichi en CO2 produit par le procédé d'adsorption et destiné au procédé de séparation par condensation partielle et/ou distillation et/ou solidification ou un compresseur d'un flux enrichi en CO2 produit par le procédé de séparation par condensation partielle et/ou distillation et/ou solidification. Le fluide, par exemple l'eau, réchauffé par l'élément I est divisé en deux et sert à réchauffer le consommateur H, qui peut être l'échangeur de chaleur qui réchauffe le débit enrichi en azote provenant de l'adsorption et destiné à une turbine en amont de la tour T. Elle peut également réchauffer un autre consommateur C. Par exemple, elle peut servir à réchauffer un liquide de purge provenant du procédé de distillation, par exemple un liquide enrichi en NOx produit par une colonne de lavage. Dans cet exemple, seulement la portion de fluide F1 utilisée pour réchauffer le consommateur C est utilisée pour réchauffer le gaz montant dans la tour T à travers l'échangeur E et la portion F2 utilisée pour réchauffer le consommateur H ne sert pas à réchauffer l'échangeur E mais est mélangée avec la portion refroidie dans l'échangeur E. Le débit mélangé est renvoyé à la source de chaleur I. L'eau réchauffée par l'élément I peut réchauffer uniquement l'échangeur de chaleur E et être renvoyée ensuite à l'élément I.

Dans cet exemple, la portion F1 de fluide envoyée à l'échangeur E après passage pour réchauffer le consommateur C est plus chaude que la portion F2 de fluide utilisée pour réchauffer le consommateur H. C'est donc la portion de fluide plus chaude qui sert à réchauffer l'échangeur E.

Ce schéma permet ainsi de proposer une solution de réchauffement des gaz rejetés à l'atmosphère à iso équipement (voire avec un équipement en moins si le serpentin peut directement être intégré dans la tour eau-azote T). La présence de l'échangeur de chaleur E dans la tour T induit cependant une légère perte de charge (environ 50 mbar) qu'il faudra compenser par une détente plus faible dans la turbine qui détend le débit enrichi en azote à évacuer par la tour T, impliquant une perte d'énergie donnée à l'arbre de machine constitué par la turbine couplée à un compresseur. Cependant la suppression de l'échangeur E à l'eau de refroidissement CW sur la boucle d'eau chaude (voir [FIG.2]) permet aussi de diminuer le débit d'eau de refroidissement et donc la consommation énergétique de cette boucle. Sur une température extérieure moyenne de 10°C, la consommation énergétique globale de l'unité en comptant ces deux aspects augmenterait de 0.5%.

Un dispositif de contournement B de cet échangeur de chaleur E peut être mis en place que ce soit du côté de l'eau chaude ou du gaz afin de réguler la température de l'eau chaude renvoyée au refroidisseur I du compresseur de gaz et/ou du gaz rejeté à l'atmosphère NRO.

Ainsi la température de l'eau et/ou de l'azote résiduaire gazeux contenant de la vapeur d'eau est régulée en variant le débit d'eau envoyé à l'échangeur de chaleur au moyen d'un circuit de contournement. Ainsi quand la température ambiante est plus chaude, le débit d'eau envoyé à l'échangeur de chaleur peut être réduit. De même, quand la température ambiante est plus froide, le débit d'eau envoyé à l'échangeur de chaleur peut être augmenté.

Le conduit de contournement B de l'échangeur permet de réguler la température en sortie de cet échangeur E afin de pallier les variations de température ambiante. Ce contournement peut être placé soit côté fluide chaud, soit côté fluide froid.

Il sera compris que le fluide alimentant l'échangeur de chaleur ne circule pas nécessairement dans une boucle fermée et que le circuit peut envoyer du fluide comme produit et/ou recevoir du fluide d'une source de fluide.

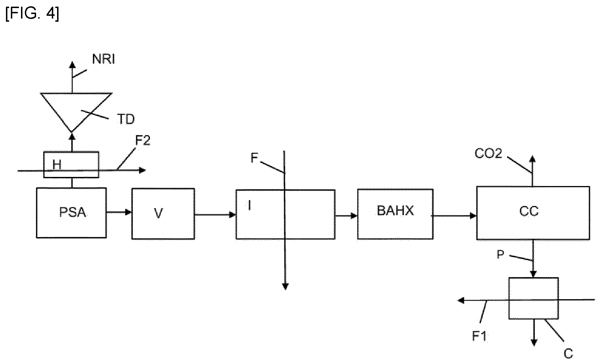

[FIG.4] illustre un procédé de séparation d'un mélange de CO2 et d'azote par adsorption et par condensation partielle et/ou distillation et/ou solidification dans lequel le mélange de CO2 et d'azote est séparé par adsorption dans une unité PSA formant un débit gazeux enrichi en azote et appauvri en CO2 NRI et un débit gazeux enrichi en CO2 et appauvri en azote, le débit enrichi en azote en bas d'une tour alimentée à un niveau d'introduction au-dessus du niveau d'envoi du débit enrichi en azote par un débit d'eau à une température supérieure à celle du débit enrichi en azote arrivant dans la tour comme décrit précédemment. Le débit enrichi en CO2 est comprimé par un compresseur V, refroidi dans un échangeur de chaleur BAHX puis est séparé par condensation partielle et/ou distillation et/ou solidification dans une unité CC pour former un flux enrichi en CO2 et éventuellement un débit de purge enrichi en NOx P. Le débit de purge P peut être réchauffé en C par le fluide F. Le refroidisseur I du compresseur (ici le refroidisseur final) sert à réchauffer le fluide F comme illustré dans les autres figures. Sinon la source de chaleur peut être un compresseur du flux enrichi en CO2 ou du mélange à séparer en amont de l'unité d'adsorption. Le débit enrichi en azote et appauvri en CO2 NRI peut par exemple être détendu dans au moins une turbine TD en amont de la tour T après préchauffage en H par le fluide F.

## Revendications

1. Procédé de séparation d'un mélange de CO2 et d'azote par adsorption et par condensation partielle et/ou distillation et/ou solidification dans lequel le mélange de CO2 et d'azote est séparé par adsorption (PSA) formant un débit gazeux enrichi en azote et appauvri en CO2 (NRI) et un débit gazeux enrichi en CO2 et appauvri en azote, le débit enrichi en azote est réchauffé en l'envoyant en bas d'une tour (T) alimentée à un niveau d'introduction au-dessus du niveau d'envoi du débit enrichi en azote par un débit d'eau (CWI) à une température supérieure à celle du débit enrichi en azote arrivant dans la tour, la tour contenant des moyens de mise en contact direct de l'eau et du débit enrichi en azote pour former un débit contenant de l'azote et de la vapeur d'eau montant dans la tour, le débit enrichi en CO2 est séparé par condensation partielle et/ou distillation et/ou solidification (CC) pour former un flux enrichi en CO2 **caractérisé en ce que** le débit contenant de l'azote et de la vapeur d'eau est réchauffé au-dessus du niveau d'introduction d'eau par un échangeur de chaleur (E) arrangé pour chauffer par échange de chaleur indirect le débit contenant de l'azote et de la vapeur d'eau, l'échangeur de chaleur étant chauffé par au moins une partie (F1) d'un débit de fluide (F), par exemple de l'eau ou de l'huile, lui-même chauffé par une source de chaleur (I) générée par le procédé de séparation.

2. Procédé selon la revendication 1 dans lequel l'échangeur de chaleur (E) est constitué par un serpentin.

3. Procédé selon la revendication 1 dans lequel l'échangeur de chaleur (E) est constitué par un tuyau qui traverse une zone de la tour (T) et qui est relié à un échangeur de chaleur à plaques (E).

4. Procédé selon une des revendications précédentes dans lequel l'échangeur de chaleur (E) se trouve dans la tour (T).

5. Procédé selon une des revendications précédentes dans lequel la source de chaleur est un refroidisseur interétage ou final (I) d'un compresseur (V) du débit enrichi en CO2 qui comprime le débit destiné à la séparation (CC) par condensation partielle et/ou distillation et/ou solidification et/ou d'un compresseur du flux enrichi en CO2 et/ou d'un compresseur du mélange à séparer.

6. Procédé selon une des revendications précédentes 1 à 4 dans lequel la source de chaleur est l'air ambiant ou de l'huile à une température ambiante et la température du débit enrichi en azote entrant dans la tour est inférieure à la température ambiante.

7. Procédé selon une des revendications précédentes dans lequel la température du débit (NRI) contenant de l'azote et de la vapeur d'eau est régulée en variant le débit du fluide envoyé à l'échangeur de chaleur au moyen d'un circuit de contournement (B).

8. Procédé selon la revendication 7 dans lequel le débit de fluide envoyé à l'échangeur de chaleur est varié au moyen du circuit de contournement (B) en fonction de la température ambiante.

9. Procédé selon l'une des revendications précédentes dans lequel le débit contenant de l'azote et de la vapeur d'eau est chauffé par l'échangeur de chaleur (E) jusqu'à au moins 40°C.

10. Procédé selon l'une des revendications précédentes dans lequel le débit enrichi en azote est détendu dans au moins une turbine (TD) en amont de la tour (T) et éventuellement le débit de fluide chauffé par la source de chaleur (I) générée par le procédé de séparation sert également à chauffer le débit enrichi en azote en amont de la détente dans l'au moins une turbine, de préférence en amont de l'échangeur de chaleur (E).

11. Appareil de séparation d'un mélange de CO2 et d'azote par adsorption et par condensation partielle et/ou distillation et/ou solidification comprenant une unité de séparation par adsorption (PSA) pour séparer le mélange de CO2 et d'azote par adsorption formant un débit (NRI) gazeux enrichi en azote et appauvri en CO2 et un débit gazeux enrichi en CO2 et appauvri en azote, une tour de refroidissement d'eau (T), une conduite pour envoyer le débit enrichi en azote se réchauffer l'envoyant en bas de la tour, une conduite pour envoyer un débit d'eau (CWI), à une température supérieure à celle du débit enrichi en azote arrivant dans la tour, pour alimenter la tour à un niveau d'introduction au-dessus du niveau d'envoi du débit enrichi en azote, la tour contenant des moyens de mise en contact direct de l'eau et du débit enrichi en azote pour former un débit contenant de l'azote et de la vapeur d'eau montant dans la tour, une unité de séparation (CC) par condensation partielle et/ou distillation et/ou solidification, une conduite pour envoyer le débit enrichi en CO2 pour être séparé dans l'unité de séparation par condensation partielle et/ou distillation et/ou solidification pour former un flux enrichi en CO2 **caractérisé en ce qu'**il comprend un échangeur de chaleur (E) disposé pour chauffer par échange de chaleur indirect le débit contenant de l'azote et de la vapeur d'eau avant de sa mise à l'air, une conduite pour envoyer au moins une partie (F1) d'un débit de fluide (F), par exemple de l'eau ou de l'huile, à l'échangeur de chaleur pour le chauffer, le débit de fluide étant lui-même relié pour être chauffé par une source de chaleur (I) générée par le procédé de séparation en amont de la tour.

12. Appareil selon la revendication 11 dans lequel l'échangeur de chaleur (E) est constitué par un serpentin.

13. Appareil selon la revendication 11 ou 12 dans lequel l'échangeur de chaleur (E) est constitué par un tuyau qui traverse une zone de la tour (T) et qui est relié à un échangeur de chaleur à plaques (E).

14. Procédé selon une des revendications précédentes 11 à 13 dans lequel l'échangeur de chaleur (E) se trouve dans la tour (T).
